# EUROPEAN PATENT APPLICATION

(11) **EP 4 507 413 A1**
(43) Date of publication of application: **12.02.2025**
(21) Application number: 23190805.4
(22) Date of filing: 10.08.2023
(51) Int. Cl.: H04W 64/00

(54) **RADIO TERMINALS, LOCATION MANAGEMENT APPARATUS FOR RADIO COMMUNICATION NETWORKS**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

There is provided a location management apparatus (LMF#1) comprising at least one processor; at least one memory including computer program code; and at least one radio communication module; the at least one processor, the at least one memory, the at least one computer program code, and the at least one radio communications module cause the location management apparatus (LMF#1) to perform at least: transmitting (318), via a downlink channel, a detachment request (DR#1), indicating that at least one anchor radio terminal (UE#2), which is selected for conducting a sidelink positioning procedure (SLP), and which is served by a different radio access node (gNB#2) than a location management function, LMF, of the location management apparatus (LMF#1) is associated with, shall detach from the different radio access node (gNB#2); receiving (336), via an uplink channel, at least one measurement report (MES#2) associated with the at least one anchor terminal (UE#2); determining (338), based on the at least one measurement report (MES#2), at least one position information (P) indication the position of a target radio terminal (UE#1); and transmitting (340) the at least one position information (P) to a requesting entity (RE).

## Description

### Prior Art

The use of sidelink positioning in the context of V2X is a promising technology in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication.

### Disclosure of the invention

The problems of the prior art are solved by radio terminals, a location management apparatus and methods to operate said radio terminals and the location management apparatus according to the independent claims.

An aspect of the description is directed to the following subject matter: A location management apparatus comprising at least one processor; at least one memory including computer program code; and at least one radio communication module; the at least one processor the at least one memory, the at least one computer program code, and the at least one radio communications module cause the location management apparatus to perform at least: transmitting, via a downlink channel, a detachment request, indicating that at least one anchor radio terminal, which is selected for conducting a sidelink positioning procedure, and which is served by a different radio access node than a location management function, LMF, of the location management apparatus is associated with, shall detach from the different radio access node; receiving, via an uplink channel, at least one measurement report associated with the at least one anchor terminal; determining, based on the at least one measurement report, at least one position information indication the position of a target radio terminal; and transmitting the at least one position information to a requesting entity.

The proposed scheme enables the sidelink positioning procedure in the case where UEs are associated with different PLMNs. By causing the anchor radio terminal to detach or disconnect from its different serving radio access node, a different LMF is not able to interrupt the sidelink positioning procedure initiated by the LMF associated with the radio access node serving the target radio terminal. A further advantage relates to the achievement that the locatio management function or location management apparatus cannot coordinate nodes managed by another LMF2, once detached, it can be considered as partial coverage.

In other words, the anchors that are connected to the different LMF are being not discarded, which is appropriate in the example case that the target UE only has partial coverage to the serving LMF and requires the use of the anchor UEs associated with the different LMF.

An advantageous example is characterized in that the location management apparatus further performs: receiving a list of anchor candidates, at least one entry of the list of anchor candidates comprises a first identifier indicating the at least one anchor radio terminal and at least a second identifier indicating the serving radio access node of the associated at least one anchor radio terminal; determining a detachment indicator, the detachment indicator indicates that at least one anchor radio terminal for serving the sidelink positioning procedure shall detach from at least one of its serving radio access nodes; and wherein the detachment request is transmitted based on the determined detachment indicator.

Advantageously, the detachment request is determined centrally based on the received list of anchor candidates. In particular, the LMF is able to distinguish between different serving radio accesses nodes associated with the anchor radio terminal candidate. Moreover, the list enables the LMF to actively select or deselect candidate anchor UEs based on their connection status with the respective gNB or cell.

An advantageous example is characterized in that the location management apparatus further performs: receiving a detachment indicator, wherein the detachment indicator indicates that at least one of the plurality of anchor radio terminals for serving the sidelink positioning procedure shall detach from at least one of its serving radio access nodes; and wherein the detachment request is transmitted based on the received detachment indicator.

Advantageously, there is provided a mechanism for detaching the anchor UE from its serving gNB triggered by a decentral determined detachment indicator.

An advantageous example is characterized in that the location management apparatus further performs: receiving, from a requesting entity, a location service request indicating a target radio terminal as a target for a sidelink positioning procedure; and transmitting, via a downlink channel, a sidelink positioning request towards the target radio terminal.

The sidelink positioning request initiates the sidelink positioning procedure.

An aspect of the description is directed to the following subject matter: A method to operate a location management apparatus the method comprising: transmitting, via a downlink channel, a detachment request, indicating that at least one anchor radio terminal, which is selected for conducting a sidelink positioning procedure, and which is served by a different radio access node than a location management function, LMF, of the location management apparatus is associated with, shall detach from the different radio access node; receiving, via an uplink channel, at least one measurement report associated with the at least one anchor terminal; determining, based on the at least one measurement report, at least one position information indication the position of a target radio terminal; and transmitting the at least one position information to a requesting entity.

An aspect of the description is directed to the following subject matter: A target radio terminal comprising at least one processor; at least one memory including computer program code; and at least one radio communication module; the at least one processor the at least one memory, the at least one computer program code, and the at least one radio communications module cause the target radio terminal to perform at least: transmitting, via a sidelink channel, a detachment request indicating that at least one anchor radio terminal, which is selected for conducting a sidelink positioning procedure together with the target radio terminal, and which is served by a different radio access node than the target radio node is associated with, shall detach from the different radio access node.

The proposed scheme enables the sidelink positioning procedure in the case where UEs are associated with different PLMNs. By causing the anchor radio terminal to detach or disconnect from its different serving radio access node, a different LMF is not able to interrupt the sidelink positioning procedure initiated by the LMF associated with the radio access node serving the target radio terminal.

An advantageous example is characterized in that the target radio terminal further performs: conducting the sidelink positioning procedure together with the at least one anchor radio terminal detached from the different radio access node, in particular transmitting and/or receiving sidelink positioning reference signals; determining and/or receiving at least one measurement report associated with the at least one detached anchor radio terminal; and transmitting, via an uplink channel, preferably the, at least one measurement report associated with the sidelink positioning procedure to the location management apparatus.

Advantageously, the detached anchor radio terminal is able to better serve the sidelink positioning procedure. Due to disconnecting from the different radio access node, conflicts arising from sidelink positioning requests originating from an LMF associated with the different radio access node are avoided.

An advantageous example is characterized in that the target radio terminal further performs: receiving, via a downlink channel, a further detachment request originating from the location management function, LMF; wherein the transmission of the detachment request to the at least one anchor radio terminal is conducted upon the reception of the further detachment request.

Advantageously, the detachment operation associated with the anchor radio terminal is controlled centrally by the LMF.

An advantageous example is characterized in that the target radio terminal further performs: transmitting, on the sidelink channel, a termination indicator that indicates a termination of the sidelink positioning procedure associated with the at least one anchor radio terminal.

Advantageously, the at least one anchor radio terminal is triggered instantaneously to return to connect to the different radio access node or synchronize to another radio access node.

An aspect of the description is directed to the following subject matter:
A method to operate a target radio terminal, the method comprising: transmitting, via a sidelink channel, a detachment request indicating that at least one anchor radio terminal, which is selected for conducting a sidelink positioning procedure together with the target radio terminal, and which is served by a different radio access node than the target radio node is associated with, shall detach from the different radio access node.

An aspect of the description is directed to the following subject matter:
An anchor radio terminal comprising at least one processor; at least one memory including computer program code; and at least one radio communication module; the at least one processor the at least one memory, the at least one computer program code, and the at least one radio communications module cause the anchor radio terminal to perform at least: receiving, via a sidelink channel, a detachment request indicating that the anchor radio terminal, which is selected for conducting a sidelink positioning procedure together with a target radio terminal, and which is served by a different radio access node than the target radio node is associated with, shall detach from the different radio access node; and detaching from at least one of the radio access nodes, in particular from the different radio access node.

The proposed scheme enables the sidelink positioning procedure in the case where UEs are associated with different PLMNs. By causing the anchor radio terminal to detach or disconnect from its different serving radio access node, a different LMF is not able to interrupt the sidelink positioning procedure initiated by the LMF associated with the radio access node serving the target radio terminal.

An advantageous example is characterized in that the anchor radio terminal further performs: conducting the sidelink positioning procedure together with the target radio terminal, in particular transmitting and/or receiving sidelink positioning reference signals; determining at least one further measurement report associated with at least one further anchor radio terminal or the target radio terminal; and transmitting, via the sidelink channel, the at least one further measurement report associated with the sidelink positioning procedure.

Advantageously, the detached anchor radio terminal can be used for the sidelink positioning procedure despite being associated with but temporarily disconnected from the different radio access node.

An advantageous example is characterized in that the anchor radio terminal further performs: synchronizing to the different radio access node or another radio access node upon termination of the sidelink positioning procedure.

Advantageously, the disconnected status is only maintained during the sidelink positioning procedure.

An advantageous example is characterized in that the anchor radio terminal further performs: receiving, on the sidelink channel, a termination indicator that indicates the termination of the sidelink positioning procedure associated with the at least one target radio terminal; wherein the synchronizing is conducted upon reception of the termination indicator.

Advantageously, the at least one anchor radio terminal is triggered instantaneously to return to connect to the different radio access node or synchronize to another radio access node.

An aspect of the description is directed to the following subject matter: A method for operating an anchor radio terminal the method comprising: receiving, via a sidelink channel, a detachment request indicating that the anchor radio terminal, which is selected for conducting a sidelink positioning procedure together with a target radio terminal, and which is served by a different radio access node than the target radio node is associated with, shall detach from the different radio access node; and detaching from at least one of the radio access nodes, in particular from the different radio access node.

According to a further aspect of the invention there is provided a computer program comprising instructions to cause the location management apparatus, or its embodiments, to execute the steps of the above-mentioned method to operate the location management apparatus, or its embodiments, and/or to cause the target radio terminal to execute the steps of the above-mentioned method to operate the target radio terminal, or its embodiments, and/or to cause the anchor radio terminal to execute the steps of the above-mentioned method for operating the anchor radio terminal, or its embodiments. Moreover, there is provided a computer-readable having stored thereon the above-mentioned computer program.

An aspect of the description is directed to a use of the methods according the above-mentioned aspects of the description.
- Figure 1: depicts a method to operate a radio communications network in a schematic sequence diagram;
- Figures 2 and 3: depict schematically different situations in a schematic top view; and
- Figure 4: depicts a location management apparatus and two radio terminals in a schematic block diagram.

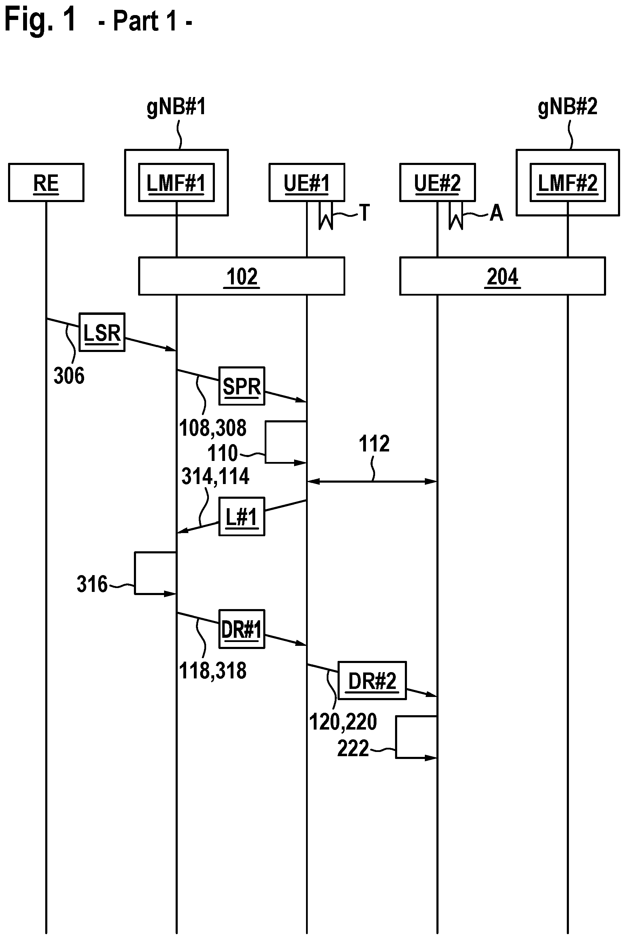

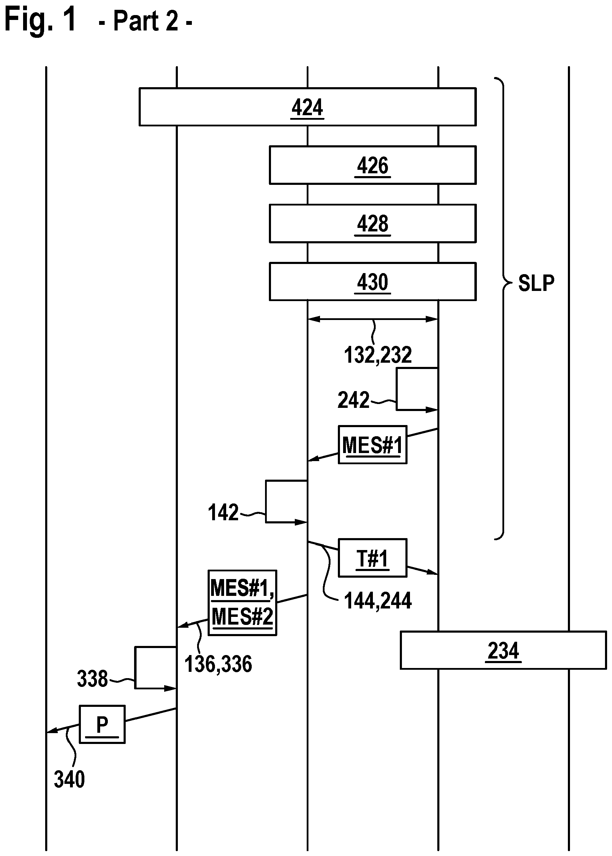

Figure 1 depicts a method to operate a radio communications network in a schematic sequence diagram. A location management apparatus LMF#1 is associated with and located in a backhaul network of a radio access node gNB#1. A location management apparatus LMF#2 is associated with and located in a backhaul network of a radio access node gNB#2 that is different from the radio access node gNB#1.

According to a respective procedure 102, 204, a radio terminal UE#1, UE#2 is in coverage of the respective radio access node gNB#1, gNB#2. The in-coverage status is related to an RRC_CONNECTED mode. In other words, UE#1 is RRC_CONNECTED with gNB#1, and UE#2 is RCC_CONNECTED with gNB#2.

The RRC_CONNECTED mode is a part of the Radio Resource Control, RRC, protocol in cellular networks, such as the 5G network with the gNB (Next-Generation NodeB). It represents a specific state within the User Equipment (UE), such as a smartphone or tablet. If the UE (User Equipment) is in RRC_CONNECTED Mode, the respective radio access node gNB has allocated specific radio resources for the UE, allowing it to communicate directly with the radio access node gNB. Since resources are already allocated, communication can occur with lower latency, resulting in a faster response time. The network actively tracks the UE's location, ensuring optimized routing of data and seamless handovers between cells if the UE is moving.

In contrast, when the UE is in RRC_IDLE mode, the network is not aware of its exact location, and no dedicated resources are allocated. This reduces energy consumption on the UE but also results in higher latency when transitioning back to RRC_CONNECTED mode.

The RRC_CONNECTED mode is critical for providing location management services, where low latency and a continuous connection are essential.

The UE in RRC_CONNECTED performs NR sidelink communication and/or V2X sidelink communication, as configured by the upper layers. The UE sends Sidelink UE Information to NG-RAN in order to request or release sidelink resources and report QoS information for each destination.

NG-RAN provides RRCReconfiguration to the UE in order to provide the UE with dedicated sidelink configuration. The RRCReconfiguration may include SL DRB configuration(s) for NR sidelink communication as well as mode 1 resource configuration and/or mode 2 resource configuration. If UE has received SL DRB configuration via system information, UE should continue using the configuration to perform sidelink data transmissions and receptions until a new configuration is received via the RRCReconfiguration.

NG-RAN may also configure measurement and reporting of CBR for NR sidelink communication and V2X sidelink communication, and reporting of location information for V2X sidelink communication to the UE via RRCReconfiguration.

The location management apparatus LMF#1 receives 306, from a requesting entity RE, a location service request LSR indicating a target radio terminal UE#1 as a target for a sidelink positioning procedure SLP. In other words, the request LSR requests to determine position information comprising the location or position of the target UE#1. The requesting entity RE could be the target UE#1 itself or a different entity in or outside the coverage of gNB#1. In another embodiment, the requesting entity is a UE is in another PLMN and LMF#1 got the request through relaying by a UE in PLMN1, e.g., target UE#1.

According to an example, the role of LMF#1 is assumed by a server UE, preferably the target UE#1 or another radio terminal not shown in figure 1. In other words, LMF#1 could be implemented in a radio terminal.

Upon receiving LSR, LMF#1 transmits 308, via a downlink channel, a sidelink positioning request SPR towards the target radio terminal UE#1.

Upon reception 108 of the SPR, the radio terminal UE#1 determines 110 its target role T.

The target radio terminal UE#1 initiates sidelink discovery 112 in order to discover candidates for anchor UEs like the radio terminal UE#1.

A list L#1 of anchor candidates is determined and transmitted 114 via an uplink channel to the LMF#1. At least one entry of the list L#1 of anchor candidates comprises a first identifier indicating the at least one anchor radio terminal UE#2 and at least a second identifier indicating the serving radio access node gNB#2 of the associated at least one anchor radio terminal UE#2.

After receiving 314 the list L#1, LMF#1 determines 316 a detachment indicator, wherein the detachment indicator indicates that the at least one anchor radio terminal UE#2 for serving the sidelink positioning procedure SLP shall detach from at least one of its serving radio access nodes gNB#2.

The detachment indicator triggers a transmission 318 of a detachment request DR#1 via the downlink channel towards UE#1.

After receiving 118, via the downlink channel, of the detachment request DR#1 originating from the location management function, LMF, UE#1 transmits a detachment request DR#2 to the at least one anchor radio terminal UE#2. Therefore, UE#1 serves as a relay for transmitting the detachment request to UE#2, which could be disconnected from gNB#1.

UE#2 receives 220, via the sidelink channel, the detachment request DR#2 from the target radio terminal UE#1, and detaches 222 from at least one of the radio access nodes, in particular from the different radio access node gNB#2. This means that UE#2 terminates its RRC_CONNECTED mode with gNB#2. For example, UE#2 enters RRC_IDLE mode with gNB#2.

In other words, once the SL discovery is achieved by target UE#1, LMF#1 has the list L#1 of possible anchor UEs together with their PLMN-ID. LMF#1 then instructs target UE#1 to relay a request for the anchor UEs of a different PLMN, Public Land Mobile Network, to perform the SL positioning procedure in partial coverage mode of the PLMN associated with the target UE#1. By getting out of coverage of their PLMN, the anchors that are originally connected to LMF#12 are then considered in partial coverage of LMF#1.

LMF#1 identifies that the at least one anchor radio terminal UE#2 is managed by LMF#2 in PLMN#2. If the identifier PLMN-ID in the respective entry in the list L#1 is empty or conforms to PLMN-ID of LMF#1, then the anchor is out of coverage or associated with LMF#1 and there is no need for further specific steps regarding the detaching.

Therefore, LMF#1 instructs UE#1 to request anchor UEs like UE#2 of other PLMNs to perform the SL positioning procedure in partial coverage mode of PLMN#1, i.e. to temporarily disconnect from their LMF#2.

The detachment mechanism is only depicted for UE#2. However, there could be a plurality of anchor radio terminals that detach from their serving gNB. In particular, there can be a plurality of serving gNBs, from which the respective anchor radio terminals detach.

UE#2 takes its anchor role A at the latest when or after disconnecting or detaching from gNB#2.

The sidelink positioning procedure SLP involves a procedure 424 comprising an exchange of positioning assistance data between at least two entities of LMF#1, UE#1, UE#2, and further anchor radio terminals.

The sidelink positioning procedure SLP involves a procedure 426 comprising a sidelink connection establishment between at least two entities of UE#1, UE#2, and further anchor radio terminals. Based on the connection, the further sidelink positioning procedure is conducted.

The sidelink positioning procedure SLP involves a procedure 428 comprising an exchange of capabilities between at least two entities of UE#1, UE#2, and further anchor radio terminals.

The sidelink positioning procedure SLP involves a procedure 430 comprising an exchange of positioning assistance data between at least two entities of UE#1, UE#2, and further anchor radio terminals.

Conducting 132, 232 the sidelink positioning procedure SLP together with the at least one anchor radio terminal UE#2 detached from the different radio access node gNB#2 involves transmitting and/or receiving of sidelink positioning reference signals via the at least one sidelink channel.

After determining 242 at least one further measurement report MES#1 associated with at least one further anchor radio terminal or the target radio terminal, UE#2 transmits 246, via the sidelink channel, the at least one further measurement report MES#1 associated with the sidelink positioning procedure SLP to the target radio terminal UE#1 in a direction towards the location management apparatus LMF#1.

UE#1 determines 142 at least one measurement report MES#2 associated with the at least one detached anchor radio terminal UE#2.

UE#1 transmits 136, via the uplink channel, at least one of the measurement reports MES#1 and MES#2 associated with the sidelink positioning procedure SLP towards the location management apparatus LMF#1.

After receiving 336, via the uplink channel, the at least one measurement report MES#1, MES#2 associated with the at least one anchor terminal UE#2, UE#1 determines 338, based on the at least one measurement report MES#1, MES#2, at least one position information P indication the position of a target radio terminal UE#1. The position information P is transmitted 340 by LMF#1 to the requesting entity RE. In other words, LMF#1 estimates the position of target UE#1 using the measurement reports MES#1-2 and reports the position to the requesting entity RE.

UE#1 as a target determines when the SLP is terminated. UE#1 transmits 144, on the sidelink channel, a termination indicator T#1 that indicates the termination of the sidelink positioning procedure SLP associated with the at least one anchor radio terminal UE#2.

After receiving 244, on the sidelink channel, of the termination indicator T#1, UE#2 returns to the RRC_CONNECTED mode with regard to gNB#2, wherein a synchronizing 234 is conducted upon reception of the termination indicator T#1.

Alternatively, UE#2 determines on its own the termination of the sidelink positioning procedure SLP, for example based on a timer or a last submission towards on the sidelink channel towards the target UE#1.

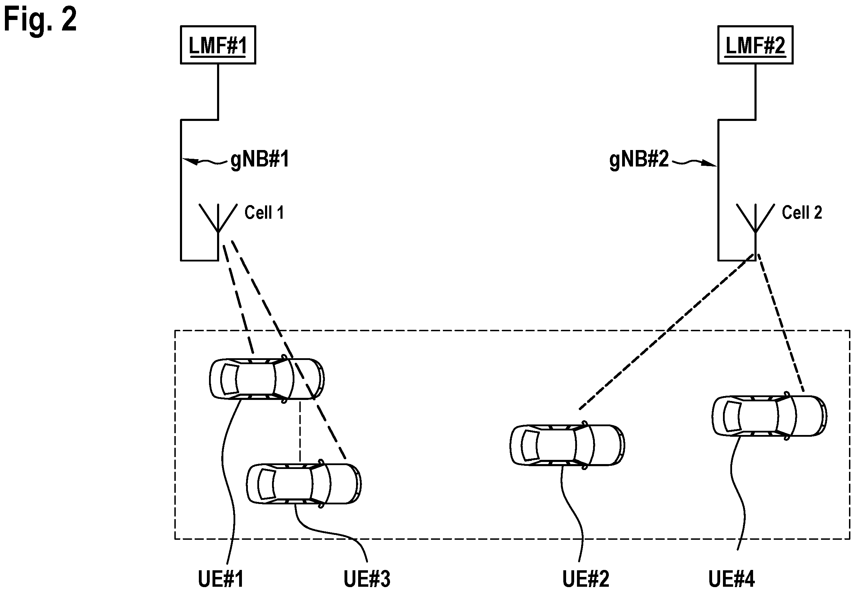

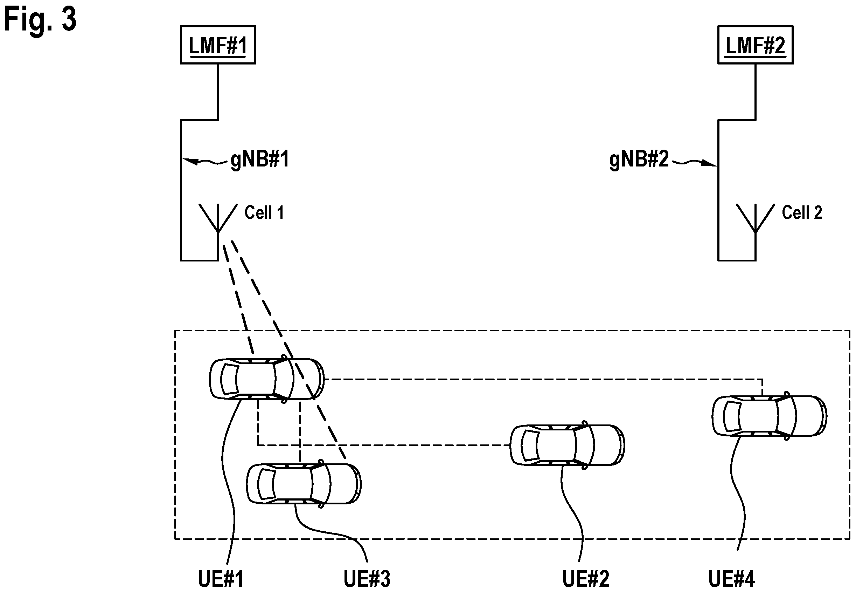

Figures 2 and 3 depict an exemplary scenario where the described method is applied. In situation shown figure 2, two cars equipped with UE#1 and a further radio terminal UE#3 are RRC_CONNECTED to gNB#1 and are therefore associated with LMF#1. LMF#1 selects UE#1 as the target UE in order to determine location information associated with UE#1. UE#2 and a further radio terminal UE#4 are RRC_CONNECTED to gNB#2 and are therefore associated with LMF#2, which is different from LMF#1.

In the situation depicted in figure 3, UE#2 and UE#3 have temporarily disconnected from gNB#2 in order to serve as anchor UEs in the sidelink positioning procedure to determine the location or position information associated with UE#1, the target UE. After terminating the former sidelink positioning procedure, both UE#2 and UE#4 will synchronize with gNB#2 and return to the RRC_CONNECTED mode with gNB#2.

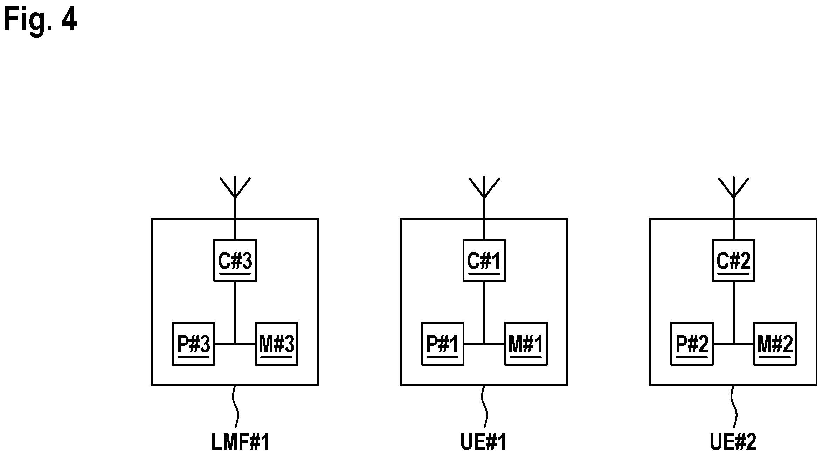

Figure 4 depicts in a schematic block diagram, that the location management apparatus LMF#1, the first and second radio terminal UE#1, UE#2, each comprise at least one processor P#1, P#2, P#3, at least one non-transitory memory M#1, M#2, M#3 including computer program code, and at least one radio communication module C#1, C#2, C#3 that comprises a respective antenna.

## Claims

1. A location management apparatus (LMF#1) comprising at least one processor; at least one memory including computer program code; and at least one radio communication module; the at least one processor, the at least one memory, the at least one computer program code, and the at least one radio communications module cause the location management apparatus (LMF#1) to perform at least:
transmitting (318), via a downlink channel, a detachment request (DR#1), indicating that at least one anchor radio terminal (UE#2), which is selected for conducting a sidelink positioning procedure (SLP), and which is served by a different radio access node (gNB#2) than a location management function, LMF, of the location management apparatus (LMF#1) is associated with, shall detach from the different radio access node (gNB#2);
receiving (336), via an uplink channel, at least one measurement report (MES#2) associated with the at least one anchor terminal (UE#2);
determining (338), based on the at least one measurement report (MES#2), at least one position information (P) indication the position of a target radio terminal (UE#1); and
transmitting (340) the at least one position information (P) to a requesting entity (RE).

2. The location management apparatus (LMF#1) according to claim 1, wherein the location management apparatus (LMF#1) further performs:
receiving (314) a list (L#1) of anchor candidates, wherein at least one entry of the list (L#1) of anchor candidates comprises a first identifier indicating the at least one anchor radio terminal (UE#2) and at least a second identifier indicating the serving radio access node (gNB#2) of the associated at least one anchor radio terminal (UE#2);
determining (316) a detachment indicator, wherein the detachment indicator indicates that at least one anchor radio terminal (UE#2) for serving the sidelink positioning procedure (SLP) shall detach from at least one of its serving radio access nodes (gNB#2); and
wherein the detachment request (DR#1) is transmitted (318) based on the determined detachment indicator.

3. The location management apparatus (LMF#1) according to claim 1 or 2, wherein the location management apparatus (LMF#1) further performs:
receiving a detachment indicator, wherein the detachment indicator indicates that at least one of the plurality of anchor radio terminals (UE#2) for serving the sidelink positioning procedure (SLP) shall detach from at least one of its serving radio access nodes (gNB#2); and
wherein the detachment request (DR#1) is transmitted based on the received detachment indicator.

4. The location management apparatus (LMF#1) according to one of the preceding claims, wherein the location management apparatus (LMF#1) further performs:
receiving (306), from a requesting entity (RE), a location service request (LSR) indicating a target radio terminal (UE#1) as a target for a sidelink positioning procedure (SLP); and
transmitting (308), via a downlink channel, a sidelink positioning request (SPR) towards the target radio terminal (UE#1).

5. A method to operate a location management apparatus (LMF#1), the method comprising:
transmitting (318), via a downlink channel, a detachment request (DR#1), indicating that at least one anchor radio terminal (UE#2), which is selected for conducting a sidelink positioning procedure (SLP), and which is served by a different radio access node (gNB#2) than a location management function, LMF, of the location management apparatus (LMF#1) is associated with, shall detach from the different radio access node (gNB#2);
receiving (336), via an uplink channel, at least one measurement report (MES#2) associated with the at least one anchor terminal (UE#2);
determining (338), based on the at least one measurement report (MES#2), at least one position information (P) indication the position of a target radio terminal (UE#1); and
transmitting (340) the at least one position information (P) to a requesting entity (RE).

6. A target radio terminal (UE#1) comprising at least one processor; at least one memory including computer program code; and at least one radio communication module; the at least one processor, the at least one memory, the at least one computer program code, and the at least one radio communications module cause the target radio terminal (UE#1) to perform at least:
transmitting (120), via a sidelink channel, a detachment request (DR#2) indicating that at least one anchor radio terminal (UE#2), which is selected for conducting a sidelink positioning procedure (SLP) together with the target radio terminal (UE#1), and which is served by a different radio access node (gNB#2) than the target radio node (UE#1) is associated with, shall detach from the different radio access node (gNB#2).

7. The target radio terminal (UE#1) according to claim 6, wherein the target radio terminal (UE#1) further performs:
conducting (132) the sidelink positioning procedure (SLP) together with the at least one anchor radio terminal (UE#2) detached from the different radio access node (gNB#2), in particular transmitting and/or receiving sidelink positioning reference signals;
determining (142) and/or receiving at least one measurement report (MES#2) associated with the at least one detached anchor radio terminal (UE#2); and
transmitting (136), via an uplink channel, at least one measurement report (MES#2) associated with the sidelink positioning procedure (SLP) to the location management apparatus (LMF#1).

8. The target radio terminal (UE#1) according to claim 6 or 7, wherein the target radio terminal (UE#1) further performs:
receiving (118), via a downlink channel, a further detachment request (DR#1) originating from the location management function, LMF;
wherein the transmission (120) of the detachment request (DR#2) to the at least one anchor radio terminal (UE#2) is conducted upon the reception (118) of the further detachment request (DR#1).

9. The target radio terminal (UE#1) according to one of claims 6 to 8, wherein the target radio terminal (UE#1) further performs:
transmitting (144), on the sidelink channel, a termination indicator (T#1) that indicates a termination of the sidelink positioning procedure (SLP) associated with the at least one anchor radio terminal (UE#2).

10. A method to operate a target radio terminal (UE#1), the method comprising:
transmitting (120), via a sidelink channel, a detachment request (DR#2) indicating that at least one anchor radio terminal (UE#2), which is selected for conducting a sidelink positioning procedure (SLP) together with the target radio terminal (UE#1), and which is served by a different radio access node (gNB#2) than the target radio node (UE#1) is associated with, shall detach from the different radio access node (gNB#2).

11. An anchor radio terminal (UE#2) comprising at least one processor; at least one memory including computer program code; and at least one radio communication module; the at least one processor, the at least one memory, the at least one computer program code, and the at least one radio communications module cause the anchor radio terminal (UE#2) to perform at least:
receiving (220), via a sidelink channel, a detachment request (DR#2) indicating that the anchor radio terminal (UE#2), which is selected for conducting a sidelink positioning procedure (SLP) together with a target radio terminal (UE#1), and which is served by a different radio access node (gNB#2) than the target radio node (UE#1) is associated with, shall detach from the different radio access node (gNB#2); and
detaching (222) from at least one of the radio access nodes, in particular from the different radio access node (gNB#2).

12. The anchor radio terminal (UE#2) according to claim 11, wherein the anchor radio terminal (UE#2) further performs:
conducting (232) the sidelink positioning procedure (SLP) together with the target radio terminal (UE#1), in particular transmitting and/or receiving sidelink positioning reference signals;
determining (242) at least one further measurement report (MES#1) associated with at least one further anchor radio terminal or the target radio terminal; and
transmitting (246), via the sidelink channel, the at least one further measurement report (MES#1) associated with the sidelink positioning procedure (SLP).

13. The anchor radio terminal (UE#2) according to claim 11 or 12, wherein the anchor radio terminal (UE#2) further performs:
synchronizing (234) to the different radio access node (gNB#2) or another radio access node upon termination of the sidelink positioning procedure (SLP).

14. The anchor radio terminal (UE#2) according to claim 13, wherein the anchor radio terminal (UE#2) further performs:
receiving (244), on the sidelink channel, a termination indicator (T#1) that indicates the termination of the sidelink positioning procedure (SLP) associated with the at least one target radio terminal (UE#1); and
wherein the synchronizing (234) is conducted upon reception of the termination indicator (T#1).

15. A method for operating an anchor radio terminal (UE#2), the method comprising:
receiving (220), via a sidelink channel, a detachment request (DR#2) indicating that the anchor radio terminal (UE#2), which is selected for conducting a sidelink positioning procedure (SLP) together with a target radio terminal (UE#1), and which is served by a different radio access node (gNB#2) than the target radio node (UE#1) is associated with, shall detach from the different radio access node (gNB#2); and
detaching (222) from at least one of the radio access nodes, in particular from the different radio access node (gNB#2).
